# EUROPEAN PATENT SPECIFICATION

(11) **EP 1 610 968 B1**
(45) Date of publication and mention of the grant of the patent: **13.12.2006**
(21) Application number: 04720745.1
(22) Date of filing: 15.03.2004
(51) Int. Cl.: B60H 1/00, B62D 25/14

(54) **BLAST DUCT FOR VEHICLE**
BLASKANAL FÜR EIN FAHRZEUG
CONDUITE DE SOUFFLE POUR VEHICULE

(30) Priority: 18.03.2003 JP 2003073815
(43) Date of publication of application: 04.01.2006
(73) Proprietor: Calsonic Kansei Corporation, Tokyo 164-8602 (JP)
(72) Inventor: OZEKI, Yukio C/O Calsonic Kansei Corporation, Tokyo 164-8602 (JP); MATSUTANI, Yo C/O Calsonic Kansei Corporation, Tokyo 164-8602 (JP); ONDA, Masaharu C/O Calsonic Kansei Corporation, Tokyo 164-8602 (JP)
(74) Representative: Grünecker, Kinkeldey, Stockmair & Schwanhäusser Anwaltssozietät
(86) International application number: PCT/JP2004/003434
(87) International publication number: WO 2004/082970

(56) References cited:
- EP-A- 1 075 972
- WO-A-01/70558
- DE-A- 10 046 120
- US-A1- 2001 024 047

## Description

### TECHNICAL FIELD

The present invention relates to a blast duct for a vehicle which is connected to an outlet port of an air-conditioning unit for a vehicle.

### BACKGROUND ART

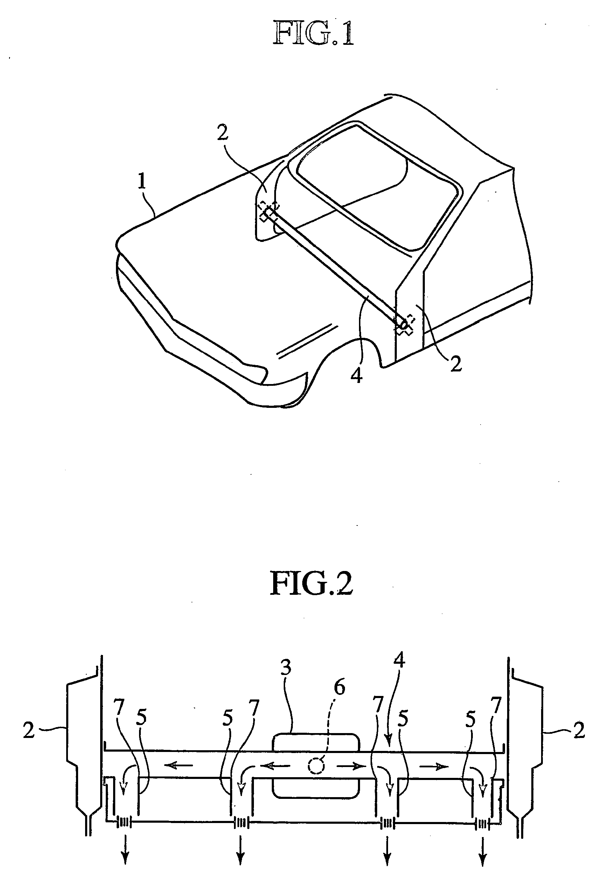

With reference to Figs.1 , 2, a conventional blast duct 4 for a vehicle functions also as a cross member having a closed cross section structure connected between front pillars 2 and 2 (side walls of a vehicle 1) (refer, for example, to Japanese Utility Model Application No. S56-155917 and Japanese Patent Application Laid-open No. H11-192972). In other words, the cross member 4 is provided with an introduction port 6 communicated with an outlet port of an air-conditioning unit 3, and a discharge port 7, and an internal space of the cross member 4 is structured as a blast pipe. Meanwhile, reference numeral 5 denotes an auxiliary duct.

According to the blast duct 4 having the structure mentioned above, since the cross member functions also as the blast pipe, a manufacturing cost can be reduced in comparison with the case that the cross member and the blast pipe are provided as independent bodies.

DE-A-100 46 120 discloses also a conventional blast duct according to the preamble of claim 1.

However, in the conventional blast duct 4 for the vehicle, in order to maintain a strength of the cross member, there is room for improvement in an air distributing performance of the blast duct 4.

The present invention is made for solving the problems in the related art mentioned above, and an object of the present invention is to provide a blast duct which can maintain a strength of a cross member while improving an air distributing performance.

### DISCLOSURE OF INVENTION

In order to achieve the object mentioned above, according to the present invention, there is provided a blast duct for a vehicle which is comprised of an introduction port for introducing an air, discharge ports provided in both sides in a vehicle width direction with respect to the introduction port and discharging the air introduced from the introduction port, a convex rectifying portion formed so as to protrude to the introduction port from an inner wall of the cross member opposing to the introduction port, and distributing the air introduced from the introduction port toward the discharge port, and a first reinforcing member connecting a wall provided in a vehicle width direction of an inner wall of the cross member from a top portion of the convex rectifying portion.

### BRIEF DESCRIPTION OF THE DRAWINGS

Fig. 1 is a schematic perspective view showing a blast duct for a vehicle which doubles as a conventional cross member;
Fig. 2 is a schematic cross sectional view of the blast duct for the vehicle in Fig. 1;

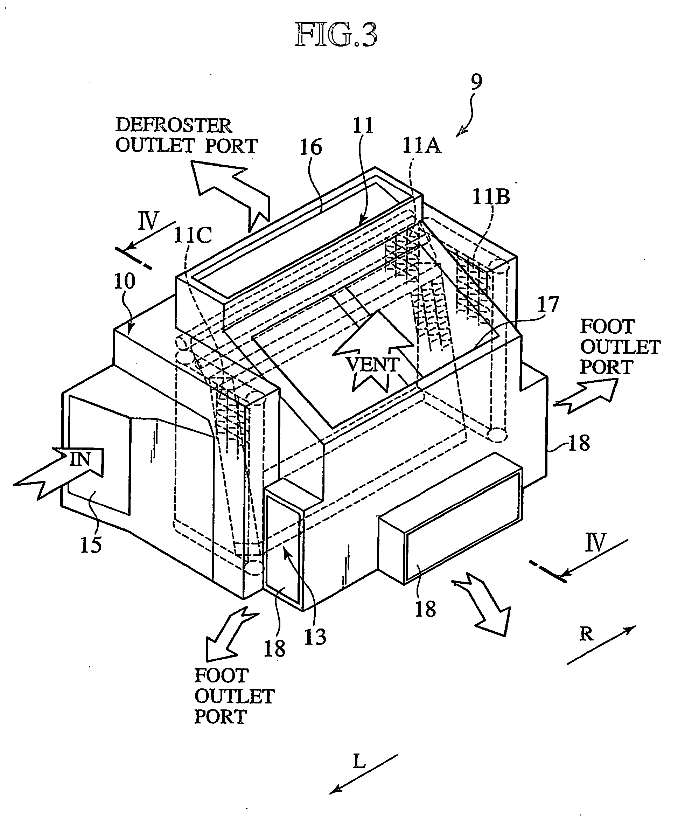

Fig. 3 is a perspective view of an air-conditioning unit for a vehicle to which the blast duct for the vehicle according to the present invention is connected;

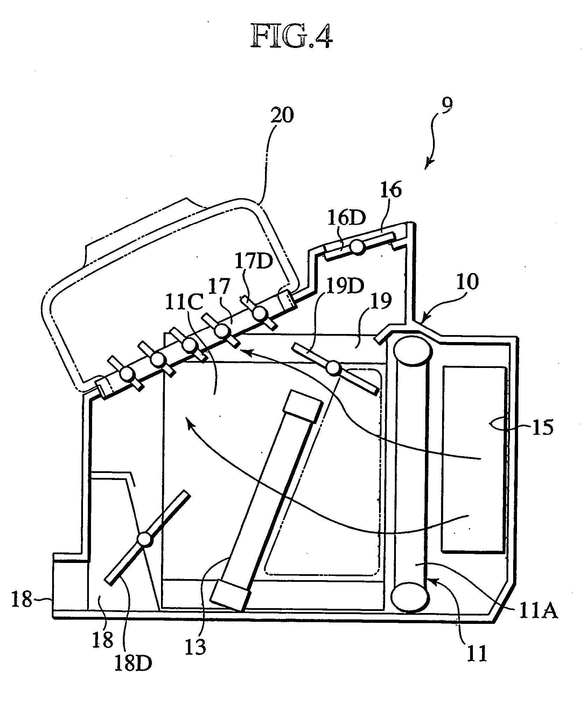

Fig. 4 is a cross sectional view along a line IV-IV in Fig. 3;
Fig. 5 is an enlarged vertical cross sectional view along a vehicle width direction showing a state where the blast duct according to the present invention is mounted to a vent outlet port of the air-conditioning unit for the vehicle;
Fig. 6 is a top elevational view of the blast duct;
Fig. 7 is a cross sectional view along a line VII-VII in Fig. 6; and

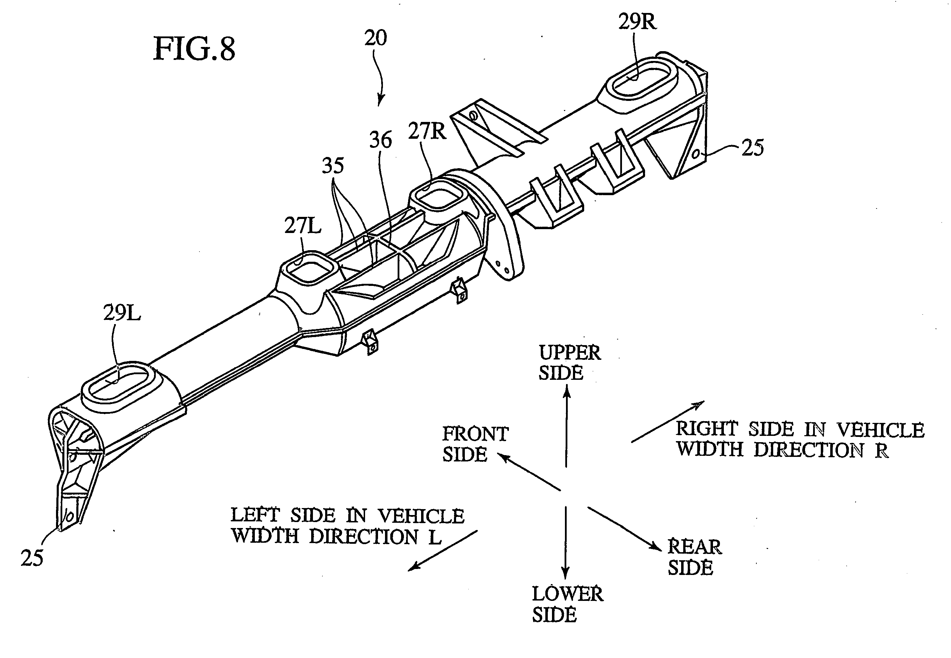

Fig. 8 is a perspective view of the blast duct.

### BEST MODE FOR CARRYING OUT THE INVENTION

A preferable embodiment according to the present invention will be described below with reference to the accompanying drawings.

### Air-Conditioning Unit

An air-conditioning unit 9 for a vehicle will be described below. The air-conditioning unit 9 for the vehicle is provided with a unit case 10 in which a cooling heat exchanger 11 (an evaporator) and a heat exchanger 13 (a heater core) are arranged in a blast pipe, and is structured such that a temperature of an air sucked from an introduction port 15 is regulated by adjusting an amount of a hot water circulating in the heat exchanger 13, and the regulated air is blown out from outlet ports 16, 17 and 18.

In detail, the cooling heat exchanger 11 provided with a first member 11A, a second member 11B and a third member 11C is arranged in an upstream side of the blast pipe so as to be formed in an approximately C shape, and the heat exchanger 13 is arranged in a downstream side of the cooling heat exchanger 11 (11A, 11B and 11C) arranged in the C shape. Further, a bypass passage 19 bypassing the heating heat exchanger 13 is provided in a downstream side of the cooling heat exchanger 11. At a time of fully cooling, in order to minimize a ventilation resistance, a maximum blowout air flow amount at a time of cooling is secured by opening a bypass door 19D provided in the bypass passage 19.

In this case, the outlet ports 16, 17 and 18 are selected by selectively opening and closing mode doors 16D, 17D and 18D.

### Blast Duct

A blast duct 20 according to the present invention is connected so as to be communicated with the outlet port 17 of the air-conditioning unit 9 mentioned above. In this case, since the blast duct connected so as to be communicated with a defroster outlet port and a foot outlet port has the same structure as the conventional structure, a description thereof will be omitted.

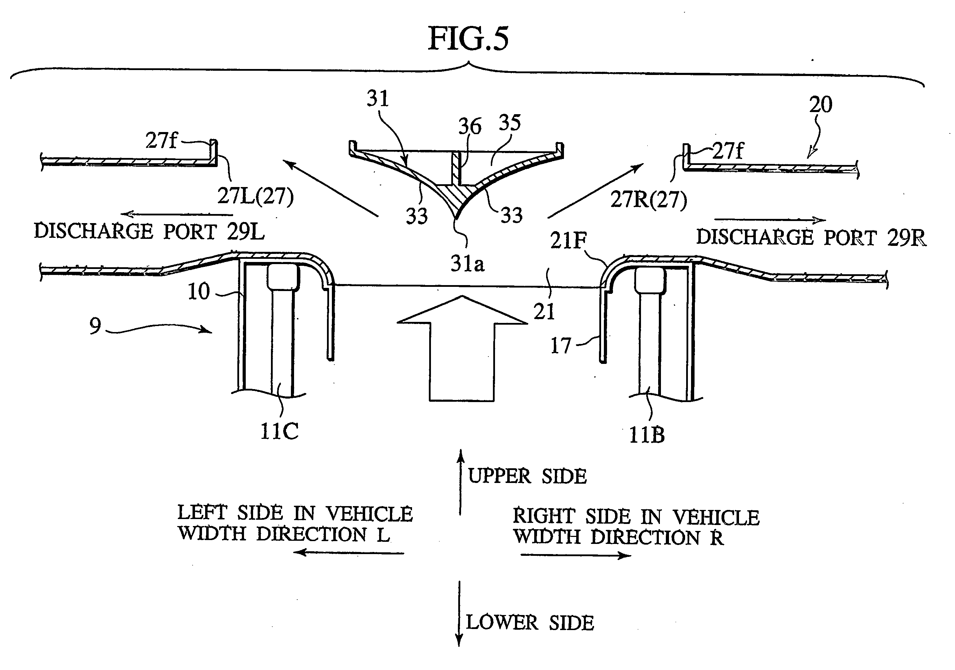

As shown in Figs.5 to 7, the blast duct 20 also functions as a cross member having a closed cross sectional structure connected to both side walls 2 and 2 of the vehicle in a vehicle width direction. In other words, an introduction port 21 and discharge ports 27 and 29 are provided in the cross member 20 arranged along the vehicle width direction and having the closed cross sectional structure, and an internal space of the cross member 20 functions as a blast pipe.

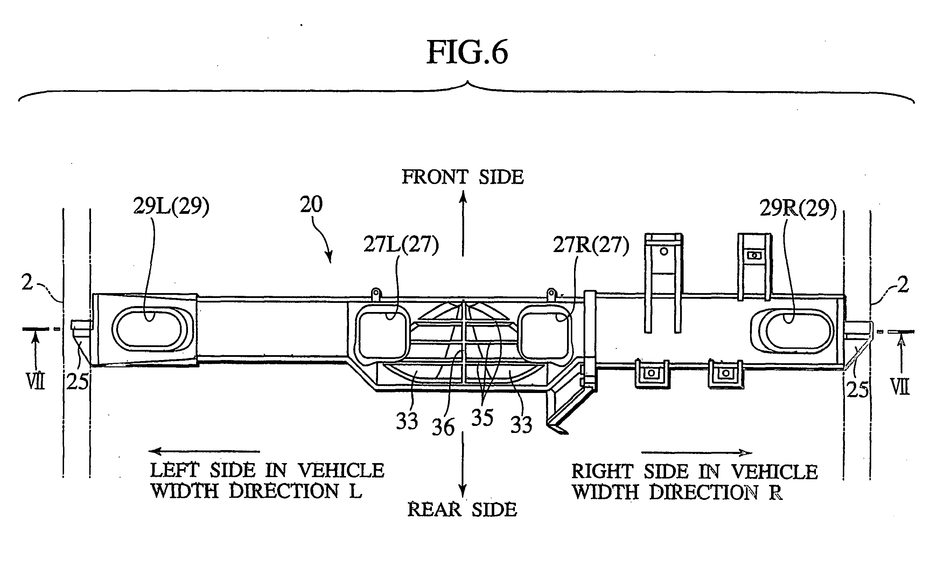

With reference to Fig. 6, mounting portions 25 and 25 for mounting to the vehicle body side wall 2 are provided in both ends in a longitudinal direction (both ends in the vehicle width direction) of the blast duct 20. According to the present embodiment, the blast duct 20 holds a steering shaft (not shown) in a driver's seat side (a right side in the vehicle width direction).

The introduction port 21 is provided in a center portion of the blast duct 20 in the vehicle width direction, and is connected to the outlet port 17 of the air-conditioning unit 9. Further, center discharge ports 27 which is comprised of a pair of discharge ports 27L and 27R are provided near a center of the introduction port 21, and left and right discharge ports 29 which is comprised of a left discharge port 29L and a right discharge port 29R are provided in a lateral direction, respectively.

Flanges 21f, 27f and 29f are formed in peripheral edges of the introduction ports 21 and 21, and the discharge ports 27 (27L and 27R), and 29 (29L and 29R), respectively. The flanges 21f, 27f and 29f are provided so as to protrude toward an outer side of the blast duct 20, and reinforce the peripheral edges of the introduction ports 21, and the discharge ports 27 (27L and 27R) and 29 (29L and 29R).

A convex rectifying portion 31 bulging toward the introduction port 21 and having an approximately V-shaped cross section is formed in an opposing wall of the flange 27f. The convex rectifying portion 31 is comprised of a pair of inclined walls 33 and 33 which are inclined toward outer sides L and R in the vehicle width direction.

The wind from the introduction port 21 is separated into the discharge ports 27L and 29L in a left side L in the vehicle width direction and the discharge ports 27R and 29R in a right side R in the vehicle width direction, by the convex rectifying portion 31. Further, since the inclined walls 33 and 33 are formed in a curved shape so as to bulge to an outer wall side, the wind from the introduction port 21 is deflected toward outer sides L and R in the vehicle width direction step by step.

A plurality of ribs 35 for reinforcing the cross member 20 are formed in a space S defined by the inclined walls 33 and 33 which are branched from a top portion 31a of the convex rectifying portion 31 and are opposed to each other. The ribs 35 are provided along the vehicle width direction. Further, cross ribs 36 orthogonal to the ribs 35 are formed.

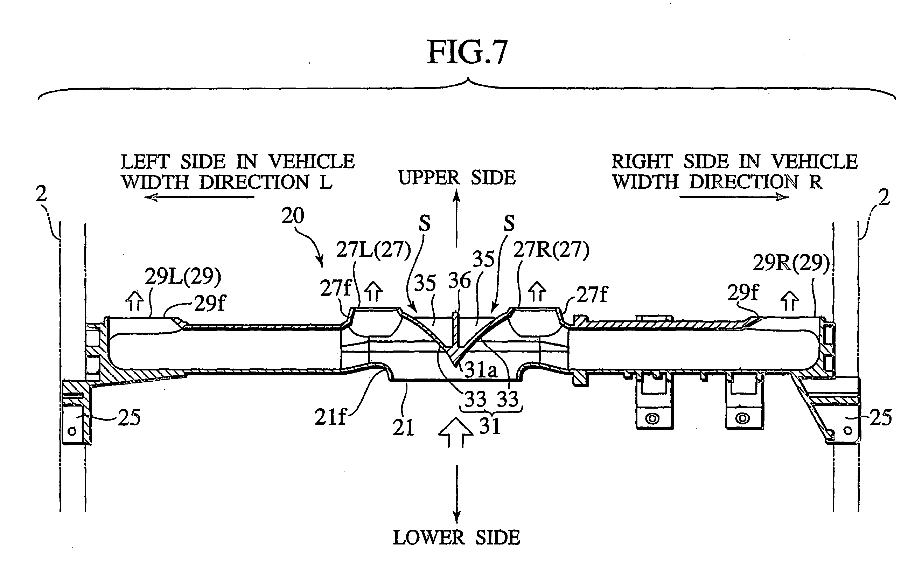

The flange 21f of the introduction port 21 is formed so as to protrude into the outlet port 17 of the air-conditioning unit 9, and has a structure which is preferable for positioning at a time of assembling the blast duct 20 and the air-conditioning unit 9. A cross sectional shape of the flange 21f of the introduction port 21 along the vehicle width direction is formed in a flare shape broadened toward a base end side from a leading end as shown in Figs. 5 and 7. In other words, the cross sectional shape of the flange 21f along the vehicle width direction is formed in an R shape bulging to an inner side of the blast pipe.

In this case, auxiliary ducts (not shown) are connected to the blast duct 20 according to this embodiment in correspondence to the respective discharge ports 27L, 29L, 27R and 29R, and the air-conditioning wind blown out from the bent outlet port of the air-conditioning unit 9 is blown out from a predetermined position to a space within a passenger room through the auxiliary ducts.

According to the blast duct 20 of the embodiment, the following effects can be achieved.

First, i) since the opposing walls of the introduction port 21 are structured as the convex rectifying portion 31 provided with a pair of inclined walls 33 and 33 which are provided so as to protrude to the introduction port 21 and are inclined toward both sides L and R in the vehicle width direction, the wind from the introduction port 21 is smoothly separated toward the discharge ports 27L, 29L, 27R and 29R in both sides L and R in the vehicle width direction, based on a separating effect of the convex rectifying portion 31. Accordingly, a wind distributing performance of the blast duct 20 is improved. Further, ii) since there is provided with the rib 35 (the reinforcing member) being astride the top portion 31a of the convex rectifying portion 31 and connecting the walls 33 and 33 in both sides L and R in the vehicle width direction, it is possible to complement a rigidity in a peripheral portion of the convex rectifying portion 31. As a result, it is possible to obtain a desired rigidity required as the cross member while improving the wind distributing performance.

Secondly, since the peripheral edge portion of the introduction port 21 is structured as the flange 21f, it is possible to improve a rigidity near the introduction port 21. Accordingly, it is possible to complement a rigidity of an opening which tends to be fragile.

Thirdly, since the flange 21f of the introduction port 21 is structured as the flange 21f protruding into the outlet port 21 of the air-conditioning unit 9, the flange 21f of the blast duct 20 is engaged with the peripheral edge portion of the outlet port 17 of the air-conditioning unit 9 so as to be positioned, at a time of assembling the blast duct 20 and the air-conditioning unit 9, so that it is easy to assemble.

Fourthly, the flange 21f of the introduction port 21 is formed such that the cross sectional shape along the vehicle width direction is broadened toward the base end side from the leading end. In other words, the structure is made such that the passage cross sectional area of the tubular flange 21f is expanded toward the downward side step by step. Accordingly, the ventilation resistance near the introduction port 21 of the blast duct 20 is further lowered, and the wind distributing performance of the blast duct 20 is improved.

Fifthly, since the flange 21f of the introduction port 21 is formed in the flare shape (the R shape), the wind from the introduction port 21 is more smoothly separated into both sides L and R in the vehicle width direction, in comparison with the case that the flange 21f is formed in a linear shape. Accordingly, the ventilation resistance near the introduction port 21 of the blast duct 20 becomes lower, and the wind distributing performance of the blast duct 20 is improved.

Sixthly, since a pair of opposing inclined walls 33 and 33 structuring the convex rectifying portion 31 are formed in the curved shape (the R shape) so as to bulge toward the outer side of the blast passage, the wind from the introduction port 21 is more smoothly separated into both sides L and R in the vehicle width direction, in comparison with the case that the inclined wall is formed in the linear shape. Accordingly, the ventilation resistance near the introduction port 21 of the blast duct 20 is further lowered, and the wind distributing performance of the blast duct 20 is improved.

As is understood from the description mentioned above, according to the present invention, the blast duct is provided with the discharge ports in both sides in the vehicle width direction with respect to the introduction port, and first the opposing walls of the introduction port are structured as the convex rectifying portions bulging toward the introduction port so as to separate the wind from the introduction port toward the discharge ports in both sides in the vehicle width direction. Accordingly, the wind distributing performance of the blast duct is improved.

Furthermore, since there is provided the reinforcing member being astride the top portion of the convex rectifying portion and connecting the walls in both sides in the vehicle width direction, it is possible to complement the rigidity of the convex rectifying portion. As a result of the structure mentioned above, it is possible to maintain the rigidity required as the cross member while improving the wind distributing performance.

### INDUSTRIAL APPLICABILITY

According to the present invention, since the convex rectifying portion is provided, and the rectifying portion is reinforced by the reinforcing member. Hence, it is possible to obtain the cross member having a high rigidity while improving the wind distributing performance.

## Claims

1. A blast duct (20) for a vehicle provided in a cross member connecting both side walls in a vehicle width direction of a vehicle body comprising:
an introduction port (21) for introducing an air;
discharge ports (27, 29) provided in both sides in a vehicle width direction with respect to the introduction port (21) and discharging the air introduced from the introduction port;
the blast duct (20) being **characterised in that** it furthermore comprises:
a convex rectifying portion (31) formed so as to protrude to the introduction port (21) from an inner wall of the cross member opposing to the introduction port, and distributing the air introduced from the introduction port toward the discharge port (27, 29); and
a first reinforcing member (35) connecting a wall provided in a vehicle width direction of an inner wall of the cross member from a top portion of the convex rectifying portion.

2. A blast duct for a vehicle according to claim 1, wherein a flange (21f) is provided in a peripheral edge portion of the introduction port.

3. A blast duct for a vehicle according to claim 2, wherein the flange of (21f) the introduction port (21) protrudes to an inner side of the outlet port (27, 29) in such a manner as to be engaged with an outlet port of an air-conditioning unit.

4. A blast duct for a vehicle according to claim 3, wherein the flange (21f) of the introduction port (21) is formed so as to be broadened from an opening of the introduction port to a base end side in a cross sectional shape along the vehicle width direction.

5. A blast duct for a vehicle according to claim 4, wherein the flange (21f) of the introduction port (21) is formed in a flare shape which is broadened from an opening of the introduction port (21) to a base end side in a cross sectional shape along the vehicle width direction.

6. A blast duct for a vehicle according to any one of claims 1 to 5, wherein the convex rectifying portion (31) is comprised of a pair of opposing inclined walls (33), and the inclined walls (33) are formed in a curved shape so as to bulge toward an outer side of the blast pipe for introducing the air introduced from the introduction port in a longitudinal direction of the blast duct for the vehicle.

7. A blast duct for a vehicle according to claim 1, wherein a second reinforcing member (36) is provided at a position orthogonal to the first reinforcing member (35).

## Patentansprüche

1. Luftleitung (20) für ein Fahrzeug, die in einem Querträger vorhanden ist, der beide Seitenwände einer Fahrzeugkarosserie in einer Fahrzeug-Breitenrichtung verbindet, wobei sie umfasst:
eine Einleitöffnung (21) zum Einleiten von Luft;
Ausströmöffnungen (27, 29), die an beiden Seiten in einer Fahrzeug-Breitenrichtung in Bezug auf die Einleitöffnung (2) vorhanden sind und die über die Einleitöffnung eingeleitete Luft ausströmen lassen;
wobei die Luftleitung (20) **dadurch gekennzeichnet ist, dass** sie des Weiteren umfasst:
einen konvexen Begradigungsabschnitt (31), der so ausgebildet ist, dass er in die Einleitöffnung (21) von einer Innenwand des Querträgers gegenüber der Einleitöffnung vorsteht, und der die über die Einleitöffnung eingeleitete Luft auf die Ausströmöffnung (27, 29) zu verteilt; und
ein erstes verstärkendes Element (35), das Verbindung mit einer Wand herstellt, die in einer Fahrzeug-Breitenrichtung einer Innenwand des Querträgers von einem oberen Abschnitt des konvexen Begradigungsabschnitts ausgehend vorhanden ist.

2. Luftleitung für ein Fahrzeug nach Anspruch 1, wobei ein Flansch (21f) an einem Umfangsrandabschnitt der Einleitöffnung vorhanden ist.

3. Luftleitung für ein Fahrzeug nach Anspruch 2, wobei der Flansch (21f) der Einleitöffnung (21) zu einer Innenseite derAuslassöffnung (27, 29) so vorsteht, dass er mit einer Auslassöffnung einer Klimatisierungseinheit in Eingriff ist.

4. Luftleitung für ein Fahrzeug nach Anspruch 3, wobei der Flansch (21f) der Einleitöffnung (21) so ausgebildet ist, dass er von einem Loch der Einleitöffnung zu einer Basis-Endseite in einer Querschnittsform entlang der Fahrzeug-Breitenrichtung verbreitert wird.

5. Luftleitung für ein Fahrzeug nach Anspruch 4, wobei der Flansch (21f) der Einleitöffnung (21) in einer aufgeweiteten Form ausgebildet ist, die von einem Loch der Einleitöffnung (21) zu einer Basis-Endseite in einer Querschnittsform entlang der Fahrzeug-Breitenrichtung verbreitert ist.

6. Luftleitung für ein Fahrzeug nach einem der Ansprüche 1 bis 5, wobei der konvexe Begradigungsabschnitt (31) aus einem Paar einander gegenüberliegender geneigter Wände (33) besteht und die geneigten Wände (33) in einer gekrümmten Form so ausgebildet sind, dass sie sich zu einer Außenseite des Luftrohrs hin wölben, um die über die Einleitöffnung eingeleitete Luft in einer Längsrichtung der Luftleitung für das Fahrzeug einzuleiten.

7. Luftleitung für ein Fahrzeug nach Anspruch 1, wobei ein zweites verstärkendes Element (36) an einer Position rechtwinklig zu dem ersten verstärkenden Element (35) vorhanden ist.

## Revendications

1. Conduite de soufflage (20) pour un véhicule placée dans un élément transversal connectant deux parois latérales dans le sens de la largeur du véhicule d'une carrosserie de véhicule comprenant :
un orifice d'introduction (21) pour introduire de l'air ;
des orifices d'évacuation (27, 29) placés des deux côtés dans le sens de la largeur du véhicule par rapport à l'orifice d'introduction (21) et évacuant l'air introduit par l'orifice d'introduction ;
La meilleure conduite de soufflage (20) étant **caractérisée en ce qu'**elle comprend en outre :
Une partie de déviation convexe (31) formée de façon à faire saillie vers l'orifice d'introduction (21) depuis une paroi intérieure de l'élément transversal opposée à l'orifice d'introduction, et distribuer l'air introduit depuis l'orifice d'introduction vers l'orifice d'évacuation (27, 29); et
Un premier élément de renforcement (35) connectant une paroi placée dans le sens de la largeur du véhicule d'une paroi intérieure de l'élément transversal depuis une partie supérieure de la partie de déviation convexe.

2. Conduite de soufflage pour un véhicule selon la revendication 1, dans laquelle un rebord (21f) est placé dans une partie de bord périphérique de l'orifice d'introduction.

3. Conduite de soufflage pour un véhicule selon la revendication 2, dans laquelle le rebord (21f) de l'orifice d'introduction (21) fait saillie vers le côté intérieur de l'orifice d'évacuation (27, 29) de façon à venir en prise avec un orifice de sortie d'une unité de climatisation.

4. Conduite de soufflage pour un véhicule selon la revendication 3, dans laquelle le rebord (21f) de l'orifice d'introduction (21) est formé de façon à être élargi depuis une ouverture de l'orifice d'introduction vers un côté d'extrémité de base dans une forme en coupe transversale dans le sens de la largeur du véhicule.

5. Conduite de soufflage pour un véhicule selon la revendication 4, dans laquelle le rebord (21f) de l'orifice d'introduction (21) est formé en une forme d'arrondi qui est élargi depuis une ouverture de l'orifice d'introduction (21) vers un côté d'extrémité de base dans le sens de la largeur du véhicule.

6. Conduite de soufflage pour un véhicule selon l'une quelconque des revendications 1 à 5, dans laquelle la partie de déviation convexe (31) est composée d'une paire de parois inclinées opposées (33), et les parois inclinées (33) sont formées en une forme courbée de façon à être bombées vers un côté extérieur du tuyau de soufflage pour introduire l'air introduit depuis l'orifice d'introduction dans une direction longitudinale de la conduite de soufflage pour le véhicule.

7. Conduite de soufflage pour un véhicule selon la revendication 1, dans laquelle un second élément de renforcement (36) est placé en une position orthogonale au premier élément de renforcement (35).
